# EUROPÄISCHE PATENTANMELDUNG

(11) **EP 2 371 609 A2**
(43) Veröffentlichungstag der Anmeldung: **05.10.2011**
(21) Anmeldenummer: 11001728.2
(22) Anmeldetag: 02.03.2011
(51) Int. Cl.: B60L 11/08, H02P 9/30

(54) **Verfahren zur Generatorregelung bei einem verbrennungsmotorisch-elektrisch angetriebenen Flurförderzeug**

(30) Priorität: 30.03.2010 DE 102010013315
(71) Anmelder: STILL GmbH, 22113 Hamburg (DE)
(72) Erfinder: Rudolph, Christian, Dr., 21075 Hamburg (DE)
(74) Vertreter: Geirhos, Johann

(57) **Zusammenfassung**

Bei einem Verfahren zur Regelung eines Drehstromgenerators (4) eines verbrennungsmotorisch-elektrischen Antriebs (1) für eine mobile Arbeitsmaschine, insbesondere ein Flurförderzeug, mit einem Drehstromgenerator (4), einem Stromrichter (16) für die Einspeisung der elektrischer Energie des Drehstromgenerators (4) in einen Zwischenkreis (7), mit Statorstromsensoren zur Messung der Statorströme des Drehstromgenerators (4), mit Sensormitteln zur Bestimmung von Statorspannungen des Drehstromgenerators (4) und mit einer Steuervorrichtung, die in Wirkverbindung mit dem Stromrichter (16), den Statorstromsensoren und den Sensormitteln steht, bestimmt die Steuervorrichtung anhand einer Modellrechnung des Betriebsverhaltens des Generators (4) den Flussvektor und die Drehzahl (ω_{Modell}) des Drehstromgenerators (4) aus den Statorströmen und den Statorspannungen.

## Beschreibung

Die Erfindung betrifft ein Verfahren zur Regelung eines Drehstromgenerators eines verbrennungsmotorisch-elektrischen Antriebs für eine mobile Arbeitsmaschine, insbesondere ein Flurförderzeug. Die Erfindung betrifft ein Verfahren zur Regelung eines Drehstromgenerators eines verbrennungsmotorisch-elektrischen Antriebs für eine mobile Arbeitsmaschine mit einem Drehstromgenerator, einem Stromrichter für die Einspeisung der elektrischen Energie des Drehstromgenerators in einen Zwischenkreis, mit Statorstromsensoren zur Messung der Statorströme des Drehstromgenerators, mit Sensormitteln zur Bestimmung von Statorspannungen des Drehstromgenerators und mit einer Steuervorrichtung, die in Wirkverbindung mit dem Stromrichter, den Statorstromsensoren und den Sensormitteln steht.

Es ist bekannt, ein mit einem Verbrennungsmotor angetriebenes Flurförderzeug, insbesondere einen Gabelstapler, mit einem verbrennungsmotorisch-elektrischen Antriebsstrang zu versehen.

Ein solcher verbrennungsmotorisch-elektrischer Antriebsstrang weist einen durch den Verbrennungsmotor angetriebenen Generator auf, dessen elektrische Leistung über einen Zwischenkreis einem oder mehreren Fahrantriebsmotoren zugeführt wird. Dabei ist der Fahrantriebsmotor zumeist ein Asynchron-Drehstrommotor, der über einen Wechselrichter, insbesondere einen pulsweitenmodulierten Wechselrichter versorgt wird. Der Zwischenkreis des Umrichters ist zumeist ein Gleichspannungszwischenkreis und zumeist wird als Generator ein Drehstromgenerator eingesetzt, der den Zwischenkreis über einen Gleichrichter speist. Aufgrund des hohen Wirkungsgrades kommen dabei Synchrongeneratoren bevorzugt zum Einsatz. Insbesondere werden permanenterregte Drehstromsynchrongeneratoren eingesetzt, da diese in Ihrem Aufbau einfach sind.

Weiter ist bekannt, als Gleichrichter einen passiven, nicht geregelten, Diodengleichrichter einzusetzen. Die von dem permanent erregten Synchrongenerator zur Verfügung gestellte elektrische Energie hängt dabei von der momentanen Antriebsdrehzahl des mit der Synchronmaschine gekoppelten Verbrennungsmotors und der Spannung in dem Gleichspannungszwischenkreis ab, die von der Leistungsaufnahme des Wechselrichters des Fahrantriebsmotors beeinflusst wird. Die Arbeitspunkte des Synchrongenerators werden folglich von der Antriebsdrehzahl des Synchrongenerators und der abgeforderten elektrischen Leistung bestimmt.

Nachteilig an diesem Stand der Technik ist, dass eine aktive Regelung oder Steuerung der Arbeitspunkte bei gleicher Leistung des Synchrongenerators daher nur über die Regelung der Drehzahl des Verbrennungsmotors möglich ist. Es ist jedoch nicht möglich, die elektrischen Ausgangsgrößen des Synchrongenerators einzustellen, etwa welcher Strom bei einer bestimmten Spannung und bei einer gewünschten Antriebsdrehzahl abgegeben werden kann. Dies ist jedoch wünschenswert, weil dann die Leistungsaufnahme des Synchrongenerators an die Leistungs- und Drehmomentkennlinie des Verbrennungsmotors besser angepasst werden kann und es insbesondere möglich wird, den Verbrennungsmotor in Arbeitspunkten bezüglich Drehmoment und Drehzahl zu betreiben, die besonders vorteilhaft sind, beispielsweise in Bezug auf den Treibstoffverbrauch oder das Abgasverhalten.

Zur Vermeidung dieser Nachteile ist es bekannt, den Diodengleichrichter durch einen selbstgeführten Stromrichter zu ersetzen. Eine bekannte Ausführungsform eines selbstgeführten Stromrichters ist dabei ein Pulswechselrichter, der einen geregelten Betrieb des Synchrongenerators ermöglicht und vorteilhaft mit einer Pulsweitenmodulation arbeitet. Alternativ wäre etwa eine Pulshöhenmodulation möglich. Für einen solchen Synchrongenerator als geregelte Drehfeldmaschine ist eine feldorientierte oder Vektorregelung bekannt, bei der die Lage des Luftspaltfeldes bzw. dessen vektorielle Ausrichtung im Verhältnis zur tatsächlichen Drehwinkelposition des Rotors des Synchrongenerators bestimmt wird und anhand dieser Werte der Pulswechselrichter gesteuert wird. Bekannte Ausführungen einer solchen feldorientierten Regelung benötigen daher einen Drehzahlsensor oder einen Lagegeber für die Erfassung der Drehposition des Rotors des Synchrongenerators.

Nachteilig an diesem Stand der Technik ist, dass die Betriebsbedingungen bei einer mobilen Arbeitsmaschine, insbesondere einem Flurförderzeug, für einen Drehzahlsensor ungünstig sind und es daher relativ häufig zu Ausfällen kommt. Der Drehzahlsensor ist starken mechanischen Beanspruchungen, insbesondere Erschütterungen, und auch thermischen Belastungen ausgesetzt, die bei der Konstruktion und Anordnung des Drehzahlsensors zu berücksichtigen sind. Auch ist daher zu berücksichtigen, dass bei einem Reparaturfall ein Auswechseln des Drehzahlsensors mit möglichst wenig Aufwand erfolgen kann. Dies ist jedoch oft nur umsetzbar, wenn der Drehzahlsensor an dem freien Wellenende des Synchrongenerators angeordnet wird, das nicht mit dem Verbrennungsmotor verbunden ist. Nachteilig hieran ist aber, dass dadurch zusätzliche Baulänge erforderlich wird und auch die Zugänglichkeit eventuell weiteren Platz erfordert.

Der vorliegenden Erfindung liegt die Aufgabe zugrunde, den störanfälligen Drehzahlsensor bei einem geregelten Drehstromgenerators eines verbrennungsmotorisch-elektrischen Antriebs einer mobilen Arbeitsmaschine, insbesondere eines Flurförderzeugs, zu vermeiden und dennoch eine genaue Regelung des Drehstromgenerators zu ermöglichen.

Diese Aufgabe wird durch ein Verfahren zur Regelung eines Drehstromgenerators eines verbrennungsmotorisch-elektrischen Antriebs für eine mobile Arbeitsmaschine, insbesondere ein Flurförderzeug, mit den Merkmalen des unabhängigen Anspruchs 1 sowie einen verbrennungsmotorisch-elektrischen Antrieb für eine mobile Arbeitsmaschine, insbesondere ein Flurförderzeug, mit den Merkmalen des Anspruchs 14 und ein Flurförderzeug mit den Merkmalen des Anspruchs 15 gelöst. Vorteilhafte Weiterbildungen werden in den Unteransprüchen angegeben.

Die Aufgabe wird erfindungsgemäß dadurch gelöst, dass bei einem Verfahren zur Regelung eines Drehstromgenerators eines verbrennungsmotorisch-elektrischen Antriebs für eine mobile Arbeitsmaschine, insbesondere ein Flurförderzeug, mit einem Drehstromgenerator, einem Stromrichter für die Einspeisung der elektrischen Energie des Drehstromgenerators in einen Zwischenkreis, mit Statorstromsensoren zur Messung der Statorströme des Drehstromgenerators, mit Sensormitteln zur Bestimmung von Statorspannungen des Drehstromgenerators und mit einer Steuervorrichtung, die in Wirkverbindung mit dem Stromrichter, den Statorstromsensoren und den Sensormitteln steht, die Steuervorrichtung anhand einer Modellrechnung des Betriebsverhaltens des Generators den Flussvektor und die Drehzahl des Drehstromgenerators aus den Statorströmen und den durch die Sensormittel erhaltenen Werten für die Statorspannungen bestimmt. Dabei können die Werte der Statorspannungen direkt gemessene Statorspannungen oder auf der Basis von anderen durch die Sensormittel erfassten Größen, beispielsweise des Zwischenkreises, berechnete und/oder geschätzte Spannungen für eine oder mehrere der Statorspannungen sein.

Dadurch kann vorteilhaft die Anzahl der Komponenten des verbrennungsmotorisch-elektrischen Antriebs reduziert werden. Die Zuverlässigkeit wird erhöht, es werden Kosten vermieden sowie die Konstruktion wird insgesamt vereinfacht. Für die Umsetzung der erfindungsgemäßen Lösung kann die oft ohnehin schon vorhandene Umrichtertechnologie eingesetzt werden, bei der aufgrund der vorhandenen Rechenleistung auch anspruchvollere Software einsetzbar ist, sodass die erfindungsgemäße Lösung zum Großteil durch Software umgesetzt werden kann, ohne dass Mehrkosten für zusätzliche Bauteile entstehen. Der Drehzahlsensor oder Drehgeber, der rauen mechanischen Betriebsbedingungen und hohen thermischen Belastungen ausgesetzt ist, kann eingespart werden. Dadurch entstehen geringere Kosten für den Drehstromgenerator und es kann das Bauvolumen verringert werden. Auch vereinfacht sich durch den Entfall des Drehzahlsensors bzw. des Drehgebers die Verkabelung und Montage des Drehstromgenerators. Durch eine Verringerung der Anzahl der Bauteile ist prinzipiell auch eine erhöhte Zuverlässigkeit des verbrennungsmotorisch-elektrischen Antriebs zu erreichen. Auch ergeben sich mehr Möglichkeiten und konstruktive Optionen, da das Wellenende des Drehstromgenerators frei bleibt wie bei einem nicht geregelten Generator, der einen passiven Gleichrichter speist. Beispielsweise ermöglicht dies oder vereinfacht zumindest die Anordnung weiterer Zusatzaggregate, beispielsweise einer Hydraulikpumpe. Für die Modellrechnung des Betriebsverhaltens wird ein Fluss-Drehzahlmodell eingesetzt, das die von den Statorstromsensoren gemessenen Statorströme und die Statorspannungen berücksichtigt. Mit dem Fluss-Drehzahlmodell kann die Rotor- bzw. Flusslage sowie auch die Drehzahl des permanent erregten Synchrongenerators ohne einen Drehzahl- oder Lagegeber sicher bestimmt werden.

In bevorzugter Ausführungsform ist der Stromrichter ein Pulswechselrichter, insbesondere ein pulsweitenmodulierter Pulswechselrichter.

Pulsweitenmodulierte Wechselrichter weisen besonders günstige Wirkungsgrade auf.

In einer günstigen Ausbildung des erfindungsgemäßen Verfahrens ist der Zwischenkreis ein Gleichspannungszwischenkreis.

Ein Gleichspannungszwischenkreis überträgt innerhalb eines Umrichters die elektrische Energie zu einem Wechselrichter, der Strom und Spannung mit der gewünschten Phase und Frequenz zur Verfügung stellt. Alternativ ist jedoch auch ein Gleichstromzwischenkreis mit einer Zwischenkreisdrossel einsetzbar.

In vorteilhafter Ausführungsform ist der Drehstromgenerator ein Synchrongenerator, insbesondere ein permanent erregter Synchrongenerator.

Permanent erregte Synchrongeneratoren benötigen vorteilhaft keine elektrische Leistung für die Erregung des Magnetfeldes. Auch weisen Synchrongeneratoren einen hohen Wirkungsgrad auf und haben bei entsprechenden magnetischen Werkstoffen als Magnete des Rotors eine hohe Leistungsdichte, sind aufgrund des Fehlens von Schleifringen wartungsarm und weisen eine geringe Massenträgheit auf, wenn die Drehzahl erhöht werden soll. Durch den Einsatz eines beispielsweise pulsweitenmodulierenden Stromrichters können die elektrischen Ausgangsgrößen des permanent erregten Synchrongenerators so verändert werden, dass in einem bestimmten Regelbereich und einer erforderlichen elektrischen Leistungsabgabe die Arbeitsdrehzahl gewählt werden kann. Dies ermöglicht vorteilhaft eine Anpassung an die Charakteristik des eingesetzten Verbrennungsmotors und an dessen optimalen Arbeitspunkte. Es ist somit möglich, das Betriebsverhalten bezüglich spezifischen Treibstoffverbrauchs und/oder Abgasverhaltens und/oder Lärmemission zu optimieren. Insbesondere können auch besondere Betriebsbedingungen, wie etwa eine Warmlaufphase nach einem Kaltstart oder allgemein ein gewünschtes schnelles Hochfahren der abgegebenen elektrischen Leistung und folglich ein optimiertes Hochfahren der Drehzahl berücksichtigt werden.

In einer alternativen Ausführungsform wird vorteilhaft bei Statorfrequenzen im Bereich nahe Null, entsprechend niedrigen Drehzahlen nahe dem Stillstand des Drehstromgenerators, ein Testsignal ausgewertet.

Dies ermöglicht, in den kritischen Bereichen nahe einer Statorfrequenz Null, wenn der Drehstromgenerator steht oder mit sehr niedriger Drehzahl angetrieben wird, hohe

Anforderungen an Regelgüte und Stabilität sicher zu stellen. Im Regelfall, wenn ein reiner Generatorbetrieb bei dem Drehstromgenerator, insbesondere einer permanent erregten elektrischen Synchronmaschine als Synchrongenerator vorgesehen ist, wird dieser kritische Bereich niedriger Drehzahlen nach dem Start des Verbrennungsmotors rasch durchlaufen. In einem solchen Anwendungsfall bestehen nur geringe Anforderungen an die Güte und Genauigkeit der sensorlosen Regelung bei niedrigen Statorfrequenzen und der Drehstromgenerator kann mit einem für diesen kurzen Zeitraum ungenauen Fluss-Drehzahlmodell betrieben werden. Wenn jedoch auch in dem niedrigen Drehzahlbereich hohe Anforderungen an die Güte der Regelung bestehen, z.B. wenn ein Start-Stop-Betrieb des Verbrennungsmotors erfolgt und sehr schnell nach einem Start des Verbrennungsmotors bereits aus dem Drehstromgenerator Leistung abgegeben werden soll, oder wenn der Drehstromgenerator als Motor betrieben werden soll, um den Verbrennungsmotor zu starten, so ermöglicht die Auswertung eines Testsignals eine optimierte Regelung. Dabei wird im Regelfall zwischen einem einfachen Abschätzverfahren für den Flussvektor und die Drehzahl basierend auf der Modellrechnung des Betriebsverhaltens des Drehstromgenerators bei hohen Drehzahlen und somit hohen Statorfrequenzen sowie der Auswertung eines Testsignals bei niedrigen Statorfrequenzen umgeschaltet. Die Umschaltung zwischen den Berechnungsverfahren erfolgt dann betriebsbereichsabhängig.

Als Testsignal können aufgrund Anisotropie des Rotors induzierte Spannungsanteile oder durch die tatsächliche Abweichung zwischen Flussvektorlage und Lage des der Modellrechnung entsprechenden Flussvektors auftretende Spannungsanteile ausgewertet werden.

Bei Drehzahlen nahe Null kann ein reiner zwei Quadrantenbetrieb berücksichtigt werden und/oder bei Drehzahlen nahe Null kann eine Kompensation des nichtlinearen Übertragungsverhaltens des Stromrichters erfolgen.

Aufgrund des Zwei-Quadranten-Betriebs des Drehstromgenerators, bei dem nur eine Drehrichtung des Generators zulässig ist, und des dadurch eingeschränkten Betriebsbereichs ist es möglich, einen stabilen drehzahlsensorlosen geregelten Betrieb mit Maschinenmodellen auch ohne Testsignale ausreichend genau zu erreichen. Eine ausreichend präzise Kompensation des nichtlinearen Übertragungsverhaltens des Wechselrichters ermöglicht eine stabile Drehzahlregelung bereits bei Drehzahlen nahe Null, ohne dass ein Testsignal erforderlich ist.

In vorteilhafter Ausgestaltung des erfindungsgemäßen Verfahrens verwendet die Modellrechnung als Drehzahlmodell eine Nachlaufsynchronisation und/oder ein Differenzierverfahren und/oder eine Beobachterstruktur.

Bei der Nachlaufsynchronisation wird ähnlich wie bei dem Differenzierverfahren die Rotordrehzahl aus der zeitlichen Änderung der geschätzten Rotorlage bestimmt. Eine Beobachterstruktur verwendet als weitere Messgröße die Statorströme und ist besonders für geringere Drehzahlbereiche geeignet.

Vorteilhaft kann der Drehstromgenerator auch als Drehstrommotor genutzt werden und den Verbrennungsmotor antreiben und/oder starten.

Der Stromrichter kann den Drehstromgenerator als Drehstrommotor ansteuern.

Dadurch wird ein Start-Stop-Betrieb des Verbrennungsmotors ermöglicht. Dies ist insbesondere vorteilhaft, wenn zusätzlich ein Hybridantrieb mit einem Energiespeicher vorgesehen ist, bei dem Bremsenergie elektrisch zurück gewonnen und gespeichert wird, so dass der Verbrennungsmotor den Drehstromgenerator nicht durchgehend antreiben muss, um eine Stromversorgung sicherzustellen. Ebenso wird es dadurch möglich, beim Bremsen die Bremsenergie zunächst in elektrische Energie umzuwandeln und diese über das Schleppmoment des Verbrennungsmotors abzuleiten und somit eine Motorbremswirkung zu erzielen. Alternativ kann die Bremsenergie in Bremswiderstände geleitet werden.

In vorteilhafter Ausführungsform weist der verbrennungsmotorisch-elektrische Antrieb zumindest einen Asynchrondrehstrommotor als Fahrantriebsmotor auf, der in einem Bremsbetrieb als Asynchrongenerator betrieben werden kann, und wird die zur Magnetisierung des Asynchrongenerators erforderliche Blindleistung dem als Synchrongenerator betriebenen Drehstromgenerator entnommen.

Wenn der verbrennungsmotorisch-elektrische Antrieb zu einem Hybridantrieb, insbesondere einem seriellen Hybridantrieb, erweitert wird, bei dem eine Rückgewinnung der Bremsenergie beim Abbremsen des Flurförderzeugs von dem elektrischen Fahrantriebsmotor in einen elektrischen Kurzzeitspeicher, wie etwa Doppelschichtkondensatoren, aber auch Batterien erfolgen soll, besteht dadurch eine vorteilhafte Möglichkeit, die für den Generatorbetrieb von Asynchrondrehstrommotoren, insbesondere Kurzschlussläufermotoren, erforderliche Blindleistung zur Verfügung zu stellen. Die in dem Kurzzeitspeicher gespeicherte elektrische Energie kann bei der nächsten Beschleunigung des Flurförderzeugs dann wieder anstatt oder zusätzlich zu dem Strom aus dem Drehstromgenerator für den Antrieb des Fahrantriebsmotors genutzt werden.

In einer alternativen Ausführungsform bestehen die Sensormittel aus Statorspannungssensoren, die die Statorspannungen erfassen.

Durch eine Erfassung der Statorspannungen über Statorspannungssensoren kann die sensorlose Regelung des Generators genauer erfolgen.

In vorteilhafter Ausführungsform bestehen die Sensormittel aus einem Spannungssensor zur Messung einer Zwischenkreisspannung des Zwischenkreises und werden die Statorspannungen aus dieser Zwischenkreisspannung bestimmt.

Für die Statorspannungen werden anstatt durch eine direkte Messung erhaltene Werten kompensierte Spannungssollwerte eingesetzt. Die Spannungssollwerte für die Statorspannungen werden aus der gemessenen Zwischenkreisspannung und dem nichtlinearen Verhalten des Stromrichters als Stellglied berechnet. Die Spannung des Gleichspannungszwischenkreises wird im Regelfall schon für einen mit dem Gleichspannungszwischenkreis verbundenen Wechselrichter erfasst und ein entsprechender Spannungssensor ist entsprechend vorhanden. Vorteilhaft steht die Zwischenkreisspannung der Steuerung damit im Regelfall bereits zur Verfügung und kann ohne zusätzlichen Bauaufwand ein bereits vorhandener Sensor genutzt werden.

Die Aufgabe wird auch durch einen verbrennungsmotorisch-elektrischen Antrieb für eine mobile Arbeitsmaschine, insbesondere ein Flurförderzeug, mit einem Drehstromgenerator, einem Stromrichter für die Einspeisung der elektrischen Energie des Drehstromgenerators in einen Zwischenkreis, mit Statorstromsensoren zur Messung der Statorströme des Drehstromgenerators, mit Sensormitteln zur Bestimmung von Statorspannungen des Drehstromgenerators und mit einer Steuervorrichtung gelöst, wobei die Steuervorrichtung eines der zuvor geschilderten Verfahren durchführt.

Der verbrennungsmotorisch-elektrischen Antrieb weist die schon zuvor für das Verfahren geschilderten Vorteile auf.

Die Aufgabe wird auch durch ein Flurförderzeug, insbesondere einen Gabelstapler, mit einem zuvor beschriebenen verbrennungsmotorisch-elektrischen Antrieb gelöst.

Weitere Vorteile und Einzelheiten der Erfindung werden anhand der in den schematischen Figuren dargestellten Ausführungsbeispiele näher erläutert. Hierbei zeigt
- Fig. 1: einen verbrennungsmotorisch-elektrischen Antriebsstrang für ein Flurförderzeug nach dem Stand der Technik in einer schematischen Darstellung,
- Fig. 2: einen erfindungsgemäßen verbrennungsmotorisch-elektrischen Antriebsstrang für ein Flurförderzeug in einer schematischen Darstellung und
- Fig. 3: ein Regelungsschema für das erfindungsgemäße Verfahren.

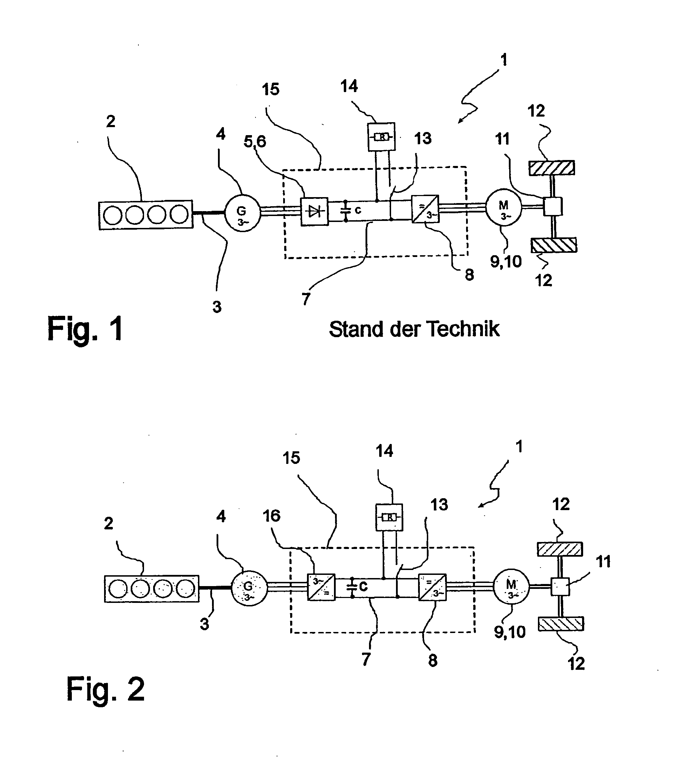

Die Fig. 1 zeigt einen verbrennungsmotorisch-elektrischen Antriebsstrang 1 für eine als Flurförderzeug, insbesondere Gabelstapler, ausgebildete mobile Arbeitsmaschine nach dem Stand der Technik in einer schematischen Darstellung. Ein Verbrennungsmotor 2 beispielsweise ein Diesel- oder Treibgasmotor ist über eine Welle 3 fest mit einem als permanent erregten Synchrongenerator ausgebildeten Drehstromgenerator 4 gekuppelt und treibt den Drehstromgenerator 4 an. Der von dem Drehstromgenerator 4 erzeugte Dreiphasen-Drehstrom wird zunächst einem als passiver Diodengleichrichter 5 aufgebauten Gleichrichter 6 zugeleitet, der den dreiphasigen Drehstrom gleichrichtet und einem als Gleichspannungszwischenkreis ausgebildeten Zwischenkreis 7 speist. Der Zwischenkreis 7 weist dabei einen Glättungskondensator C auf und speist einen Wechselrichter 8, der aus dem Gleichstrom dreiphasigen Drehstrom variabler Frequenz erzeugt, mit dem ein Fahrantriebsmotor 9 gespeist wird, bevorzugt eine Asynchrondrehstrommaschine 10. Der Fahrantriebsmotor 9 treibt über ein Differential 11 zwei Räder 12 einer Antriebsachse an, bei einem Gegengewichtsgabelstapler beispielsweise die Vorderachse. Alternativ können auch über zwei Wechselrichter Fahrantriebsmotoren für jedes Antriebrad einer Antriebsachse einzeln angesteuert werden. Der Drehstromgenerator 4 stellt entsprechend der momentanen Drehzahl, mit der er durch den Verbrennungsmotor 2 angetrieben wird, und abhängig von der Spannung in dem Zwischenkreis 7 elektrische Energie für den Wechselrichter 8 und somit den Fahrantriebsmotor 9 zur Verfügung. Über einen Bremschopper 13 kann der Zwischenkreis 7 mit einem Bremswiderstand 14 verbunden werden. Dadurch kann beim Bremsen der entsprechend ausgebildete Wechselrichter 8 elektrische Energie von dem als Generator arbeitenden Fahrantriebsmotor 9 in den Zwischenkreis 7 zurück speisen, die in dem Bremswiderstand 14 bei geschlossenem Bremschopper 13 in Wärme umgewandelt wird. Der Zwischenkreis 7 bildet zusammen mit dem Gleichrichter 6 und dem Wechselrichter 8 einen Umrichter 15.

Die Fig. 2 zeigt einen erfindungsgemäßen verbrennungsmotorisch-elektrischen Antriebsstrang 1 für eine als Flurförderzeug, insbesondere Gabelstapler, ausgebildete mobile Arbeitsmaschine in einer schematischen Darstellung. Der Darstellung der Fig. 1 entsprechende Bauteile sind mit denselben Bezugszeichen versehen. Ein Verbrennungsmotor 2 ist über eine Welle 3 fest mit einem als permanent erregten Synchrongenerator ausgebildeten Drehstromgenerator 4 gekuppelt und treibt den Synchrongenerator 4 an. Der von dem Synchrongenerator 4 erzeugte Dreiphasen-Drehstrom wird einem geregelten, als pulsweitenmodulierender Pulswechselrichter ausgebildeten Stromrichter 16 zugeleitet, der den dreiphasigen Drehstrom gleichrichtet und in den Zwischenkreis 7 speist. Der Zwischenkreis 7 weist dabei einen Glättungskondensator C auf und speist einen Wechselrichter 8, der aus dem Gleichstrom dreiphasigen Drehstrom variabler Frequenz erzeugt, mit dem ein Fahrantriebsmotor 9 gespeist wird, bevorzugt eine Asynchrondrehstrommaschine 10. Der Fahrantriebsmotor 9 treibt über ein Differential 11 zwei Räder 12 einer Antriebsachse an, bei einem Gegengewichtsgabelstapler beispielsweise der Vorderachse. Der Drehstromgenerator 4 stellt entsprechend der momentanen Drehzahl, mit der er durch den Verbrennungsmotor 2 angetrieben wird, und abhängig von der Spannung in dem Zwischenkreis 7 elektrische Energie für den Wechselrichter 8 und somit den Fahrantriebsmotor 9 zur Verfügung. Über einen Bremschopper 13 kann der Zwischenkreis 7 mit einem Bremswiderstand 14 verbunden werden. Dadurch kann beim Bremsen der entsprechend ausgebildete Wechselrichter 8 elektrische Energie von dem als Generator arbeitenden Fahrantriebsmotor 9 in den Zwischenkreis 7 zurück speisen, die in dem Bremswiderstand 14 bei geschlossenem Bremschopper 13 in Wärme umgewandelt wird. Der Zwischenkreis 7 bildet zusammen mit dem Stromrichter 16 und dem Wechselrichter 8 einen Umrichter 15.

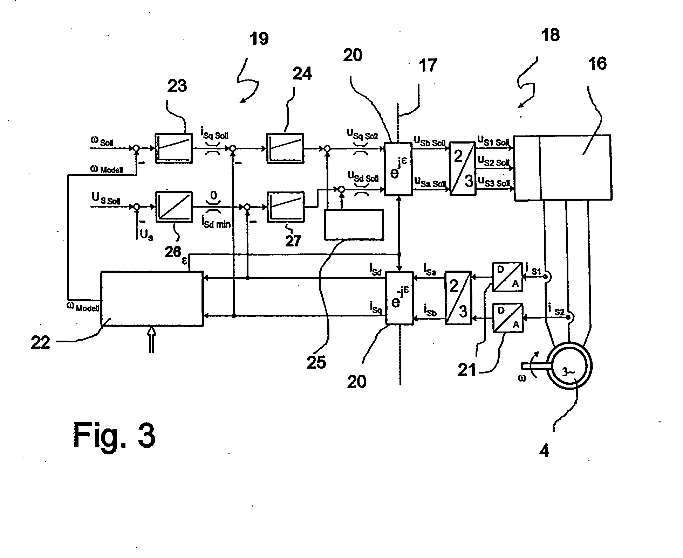

Die Fig. 3 zeigt ein Regelungsmodell entsprechend dem erfindungsgemäßen Verfahren, das ein Fluss-Drehzahlmodell nutzt und bei dem erfindungsgemäßen verbrennungsmotorisch-elektrischen Antriebsstrang 1 der Fig. 2 zum Einsatz kommt. Verdeutlicht durch die Trennlinie 17 werden die Mess- und Regelgrößen rechts von dieser Trennlinie 17 in den ortsfesten Koordinaten 18 des Stators des Drehstromgenerators 4 betrachtet. Links der Trennlinie 17 werden die Mess- und Regelgrößen in dem Koordinatensystem des Rotors des Drehstromgenerators 4 als Rotor- und Feldkoordinaten 19 betrachtet. Die Werte werden in Umsetzern 20 transformiert. Der als permanent erregter Synchrongenerator ausgebildete Drehstromgenerator 4 ist mit dem pulsweitenmodulierten Pulswechselrichter als Stromrichter 16 verbunden. An zwei der drei Statorphasen werden die Werte für den Strom i_{S1} und i_{S2} gemessen und über Analog-/Digitalwandler 21 dem benutzten Fluss-und Drehzahlmodell 22 zugeführt. Als weitere Werte erhält das Drehzahlmodell, angedeutet durch den Pfeil die Statorspannungswerte, die entweder ebenfalls gemessen werden können, oder unter Verwendung kompensierter Spannungssollwerte der Regelstruktur aus der gemessenen Zwischenkreisspannung bestimmt werden können. Das Fluss- und Drehzahlmodell 22 bestimmt dann, ohne dass ein Drehzahlsensor oder Lagegeber für den Rotor des Synchrongenerators 4 erforderlich wäre, einen modellierten Wert ω_{Modell}, der als Istwert einer Regelung zugeführt wird, die über einen Drehzahlregler 23, einen Stromregler 24 und eine Spannungsentkoppelung 25 die Stellgröße U_{qSoll} des pulsweitenmodulierten Stromrichters 16 vorgibt. Über eine zweite Regelung, bestehend aus einem Spannungsbegrenzer 26, einem Stromregler 27 und der Spannungsentkoppelung 25 wird die Stellgröße U_{dSoll} des pulsweitenmodulierten Stromrichters 16 vorgegeben. Die Werte U_{qSoll} und U_{dSoll} sind dabei an Raumzeigern in Längs- und Querachse des von dem Permanentmagneten erzeugten Flusses orientiert.

Vorteilhaft kann durch das erfindungsgemäße Verfahren die Anzahl der Komponenten des verbrennungsmotorisch-elektrischen Antriebs reduziert werden. Durch den Wegfall eines Drehzahlsensors bzw. Lagegebers wird die Zuverlässigkeit erhöht, es werden Kosten vermieden und es steht ein freies Wellenende des Synchrongenerators 4 zur Verfügung. Durch die bei Umrichtersteuerungen regelmäßig bereits vorhandene Rechenleistung lässt sich die erfindungsgemäße Lösung durch Software umsetzen, ohne dass Mehrkosten für zusätzliche Bauteile entstehen.

## Patentansprüche

1. Verfahren zur Regelung eines Drehstromgenerators (4) eines verbrennungsmotorisch-elektrischen Antriebs (1) für eine mobile Arbeitsmaschine, insbesondere ein Flurförderzeug, mit einem Drehstromgenerator (4), einem Stromrichter (16) für die Einspeisung der elektrischer Energie des Drehstromgenerators (4) in einen Zwischenkreis (7), mit Statorstromsensoren zur Messung der Statorströme des Drehstromgenerators (4), mit Sensormitteln zur Bestimmung von Statorspannungen des Drehstromgenerators (4) und mit einer Steuervorrichtung, die in Wirkverbindung mit dem Stromrichter (16), den Statorstromsensoren und den Sensormitteln steht,
wobei bei dem Verfahren die Steuervorrichtung anhand einer Modellrechnung des Betriebsverhaltens des Drehstromgenerators (4) den Flussvektor und die Drehzahl **(ω_{Modell})** des Drehstromgenerators (4) aus den Statorströmen und den Statorspannungen bestimmt.

2. Verfahren nach Anspruch 1,
**dadurch gekennzeichnet**,
der Stromrichter (16) ein Pulswechselrichter, insbesondere ein pulsweitenmodulierter Pulswechselrichter, ist.

3. Verfahren nach Anspruch 1 oder 2,
**dadurch gekennzeichnet,**
**dass** der Zwischenkreis (7) ein Gleichspannungszwischenkreis ist.

4. Verfahren nach einem der Ansprüche 1 bis 3,
**dadurch gekennzeichnet,**
**dass** der Drehstromgenerator (4) ein Synchrongenerator, insbesondere ein permanent erregter Synchrongenerator ist.

5. Verfahren nach einem der Ansprüche 1 bis 4,
**dadurch gekennzeichnet,**
**dass** bei Statorfrequenzen im Bereich nahe Null entsprechend niedrigen Drehzahlen nahe dem Stillstand des Drehstromgenerators (4) ein Testsignal ausgewertet wird.

6. Verfahren nach Anspruch 5,
**dadurch gekennzeichnet,**
**dass** als Testsignal aufgrund Anisotropie des Rotors des Drehstromgenerators (4) induzierte Spannungsanteile oder durch die tatsächliche Abweichung zwischen Flussvektorlage und Lage des Flussvektors nach der Modellrechnung auftretende Spannungsanteile ausgewertet werden.

7. Verfahren nach einem der Ansprüche 1 bis 4,
**dadurch gekennzeichnet,**
**dass** bei Drehzahlen nahe Null ein reiner zwei Quadrantenbetrieb berücksichtigt wird und/oder bei Drehzahlen nahe Null eine Kompensation des nichtlinearen Übertragungsverhaltens des Stromrichters erfolgt.

8. Verfahren nach einem der Ansprüche 1 bis 7,
**dadurch gekennzeichnet,**
**dass** die Modellrechnung als Drehzahlmodell eine Nachlaufsynchronisation und/oder ein Differenzierverfahren und/oder eine Beobachterstruktur einsetzt.

9. Verfahren nach einem der Ansprüche 1 bis 8,
**dadurch gekennzeichnet,**
**dass** der Drehstromgenerator (4) auch als Drehstrommotor genutzt werden und den Verbrennungsmotor (2) antreiben und/oder starten kann.

10. Verfahren nach Anspruch 9,
**dadurch gekennzeichnet,**
**dass** der Stromrichter (16) den Drehstromgenerator (4) als Drehstrommotor ansteuern kann.

11. Verfahren nach einem der Ansprüche 1 bis 10,
**dadurch gekennzeichnet,**
**dass** der verbrennungsmotorisch-elektrische Antrieb zumindest einen Asynchrondrehstrommotor (10) als Fahrantriebsmotor aufweist, der in einem Bremsbetrieb als Asynchrongenerator betrieben werden kann, und dass die zur Magnetisierung des Asynchrongenerators erforderliche Blindleistung dem als Synchrongenerator betriebenen Drehstromgenerator (4) entnommen wird.

12. Verfahren nach einem der Ansprüche 1 bis 11,
**dadurch gekennzeichnet,**
**dass** die Sensormittel aus Statorspannungssensoren bestehen, die die Statorspannungen erfassen.

13. Verfahren nach einem der Ansprüche 1 bis 12,
**dadurch gekennzeichnet,**
**dass** die Sensormittel aus einem Spannungssensor zur Messung der Zwischenkreisspannung des Zwischenkreises (7) bestehen und die Statorspannungen aus dieser bestimmt werden.

14. Verbrennungsmotorisch-elektrischer Antrieb für eine mobile Arbeitsmaschine, insbesondere für ein Flurförderzeug, mit einem Drehstromgenerator (4), einem Stromrichter (16) für die Einspeisung der elektrischer Energie des Drehstromgenerators (4) in einen Zwischenkreis (7), mit Statorstromsensoren zur Messung der Statorströme des Drehstromgenerators (4), mit Sensormitteln zur Bestimmung von Statorspannungen des Drehstromgenerators (4) und mit einer Steuervorrichtung,
wobei die Steuervorrichtung ein Verfahren nach einem der Ansprüche 1 bis 13 durchführt.

15. Flurförderzeug, insbesondere Gabelstapler mit einem verbrennungsmotorisch-elektrischen Antrieb (1) nach Anspruch 14.
